# EUROPEAN PATENT APPLICATION

(11) **EP 1 622 378 A1**
(43) Date of publication of application: **01.02.2006**
(21) Application number: 04722700.4
(22) Date of filing: 23.03.2004
(51) Int. Cl.: H04N 5/91, H04M 1/00

(54) **MOBILE TELEPHONE DEVICE**

(30) Priority: 08.05.2003 JP 2003130798
(71) Applicant: SHARP KABUSHIKI KAISHA, Osaka 545-8522 (JP)
(72) Inventor: HAMADA, Hiroaki, Higashihiroshima-shi, Hiroshima 739-0142 (JP); NAKANO, Masatake, Higashihiroshima-shi, Hiroshima 739-0146 (JP)
(74) Representative: Müller, Frithjof E.
(86) International application number: PCT/JP2004/003991
(87) International publication number: WO 2004/100541

(57) **Abstract**

A mobile phone generates respective thumbnail image data of a plurality of original image data obtained by a user in an image pickup unit (12) with a continuous photographing form, and temporarily stores in a first memory (14) together with the original image data. The mobile phone then displays an overview of the thumbnail image data on a display unit (17) and, immediately thereafter, can continuously display the plurality of original image data on the display unit (17). The user can determine whether to store the data or not corresponding to a state of playback thereof. When the user directs to store the original image data, the original image data is permanently stored in a second memory (15).

## Description

### Technical Field

The present invention relates to mobile phone equipment. More specifically, the present invention relates to a technique of continuously displaying image data which is photographed using a camera function of mobile phone equipment.

### Background Art

In recent years, electronic equipment has been made smaller and a function thereof has been improved. In mobile phone equipment, for example, a screen has become larger, which enables to display a large amount of text information or an image.

That is, a display screen of mobile phone equipment becomes larger and a large amount of information can be displayed, while displaying of an image also becomes sufficiently practical due to development of a color display. In addition, among the mobile phone equipment in these days, there is so-called camera-equipped mobile phone equipment having a camera including a pickup lens and an image pickup device for converting input light into an electric signal, which camera-equipped mobile phone equipment has enhanced storage capacity, size of an image display, resolution of the camera, and throughput.

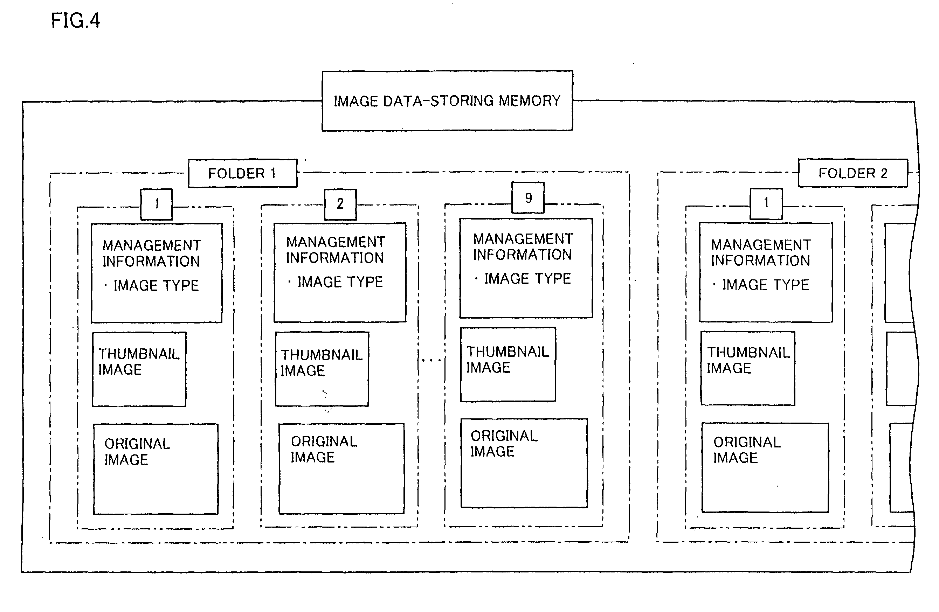

A conventional electronic still camera includes, for example, conventional photographing forms such as single shooting, continuous shooting, multi-continuous shooting, and high-speed continuous shooting, as well as an ultra-high-speed continuous shooting mode for performing continuous photographing of 40 frames at an extremely high speed of 30 frames per second when a shutter is released. In the conventional electronic still camera, a new folder is created on a storage medium for every photographing in the ultra-high-speed continuous shooting mode. By storing image files of a plurality of frames taken in single ultra-high-speed continuous shooting in the folder, handling of the image files generated in the ultra-high-speed continuous shooting mode is made easier (for example, see Japanese Patent Laying-Open No. 2001-94927, especially on pages 5-8 and Figs. 4-8).

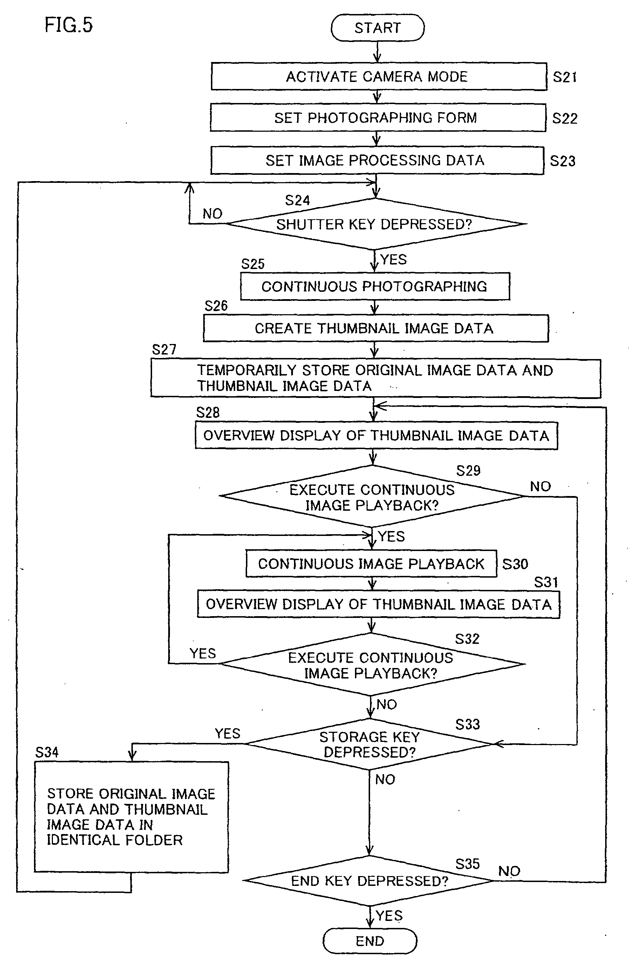

In addition, a function of the conventional electronic still camera has, for example, an animation shooting mode, and for every operation of the shutter while the animation shooting mode is set, image data captured in a CCD data capture region of an image memory is temporarily stored in a program operation region. Then, at a time of cancellation of the animation shooting mode, an animation file in a prescribed format including a plurality of still image data present in the program operation region is created. The animation file is stored in an external memory such as a flash memory together with a still image file or a moving image file. That is, in the conventional electronic still camera, the animation file can be created automatically only by operating the shutter for a plurality of times. In addition, when a playback mode is set, the animation file is selected and the still image data included therein is successively read and displayed on a monitor (for example, see Japanese Patent Laying-Open No. 2003-37808, especially on pages 7-9 and Figs. 5-8).

As described above, a photographing method of a continuous shooting form is possible in the conventional electronic still camera, and continuous photographing is possible using the continuous shooting form. In addition, the conventional electronic still camera has the animation shooting mode and the plurality of still image data photographed by a user can be utilized to create one animation file.

Though a conventional mobile phone equipment having a camera function has the photographing method of the continuous shooting form and can perform the continuous photographing using the continuous shooting form, however, the plurality of still image data photographed cannot be stored in a separate folder as a batch. Thus, since the still image data in the conventional mobile phone equipment having the camera function is first stored in a specific image folder regardless of the photographing form thereof, the user must move each of the stored still image data to a desired folder, which work is found to be cumbersome.

In addition, for continuously displaying the photographed plurality of still image data in the conventional mobile phone equipment having the camera function, the user must store the photographed plurality of still image data and then move the still image data to the desired folder as described above to create a new folder for use in the playback mode. After the user selects the desired folder and performs a playback operation, the plurality of still image data in the folder are continuously displayed on a display unit. Since the mobile phone equipment has a limited memory capacity while the plurality of still image data must be stored, the memory capacity of the mobile phone equipment cannot be used efficiently.

Furthermore, in the conventional mobile phone equipment having the camera function, it is necessary to once store the plurality of still image data in the desired folder as described above, and the user cannot perform the playback immediately after the photographing. Therefore, a complicated operation by the user as mentioned above is required, and an additional work to delete the data after the playback is also required when it is different from an expectation of the user, which results in low operability. In addition, the user cannot check a state of continuous display until the folder is selected and the playback is performed. Therefore, since the plurality of still image data obtained by the continuous photographing are unfailingly stored regardless of a need for storing of the user in the conventional mobile phone equipment, the best shot may be missed due to lack of the memory capacity.

### Disclosure of the Invention

The present invention is made in view of the current state as described above. An object of the present invention is to facilitate an operation for checking a plurality of still image data obtained by continuous photographing.

Mobile phone equipment according to an aspect of the present invention includes a photographing unit for converting incident light into an electric signal and outputting as image data, a first image data storage unit for temporarily storing a plurality of original image data obtained with a continuous photographing function of the photographing unit, a display unit for displaying the original image data, and an image data playback unit for continuously displaying on the display unit the plurality of original image data stored in the first image data storage unit.

With this, in the mobile phone equipment, a user can continuously play back the original image data on the display unit when the plurality of original image data obtained using a camera function of the mobile phone equipment are temporarily stored.

In addition, it is preferable that the mobile phone equipment according to the present invention further include a thumbnail image data generation unit for generating thumbnail image data from the original image data, and on the display unit, an overview of the thumbnail image data of the original image data be displayed after the plurality of original image data be obtained with the continuous photographing function of the photographing unit.

With this, in the mobile phone equipment, the user can generate the thumbnail image data created from the plurality of original image data obtained using the camera function of the mobile phone equipment, and display the overview of the thumbnail image data on the display unit. Then, the user can check an overview display screen of the thumbnail image data and, thereafter, continuously play back the original image data on the display unit.

In addition, in the first image data storage unit of the mobile phone equipment according to the present invention, the original image data and the thumbnail image data are preferably temporarily stored.

With this, since the original image data and the thumbnail image data temporarily stored in the first image data storage unit are used in the mobile phone equipment, continuous display on the display unit is possible with omitting a step of permanently storing both of the data.

In addition, it is preferable that the mobile phone equipment according to the present invention further include a second image data storage unit for permanently storing image data, and in the second image data storage unit, the plurality of original image data obtained in single photographing through the continuous photographing function of the photographing unit and the thumbnail image data be stored in an identical folder.

With this, in the mobile phone equipment, a need for storing the original image data and the thumbnail image data temporarily stored in the first image data storage unit can be determined and, thereafter, the data can be sectionalized for each folder and stored as a batch in the second image data storage unit.

Mobile phone equipment according to another aspect of the present invention includes a photographing unit for converting incident light into an electric signal and outputting as image data, a thumbnail image data generation unit for obtaining the image data as original image data and generating thumbnail image data from the original image data, a display unit for displaying an overview of a plurality of thumbnail image data obtained by the photographing unit through a continuous photographing function, an image data storage unit for storing the original image data and the thumbnail image data in an identical folder, and an image data playback unit for reading the original image data from the folder and continuously displaying on the display unit.

With this, in the mobile phone equipment, a user can generate the thumbnail image data created from the plurality of original image data obtained using the camera function of the mobile phone equipment, and display the overview of the thumbnail image data on the display unit. Then, the user can check an overview display screen of the thumbnail image data and, thereafter, store the original image data and the thumbnail image data as a batch in the identical folder. In addition, in the mobile phone equipment according to the present invention, the original image data in the folder can be continuously played back on the display unit by selecting the folder and playing back.

In addition, in the image data playback unit of the mobile phone equipment according to the present invention, a plurality of the original image data are preferably displayed on the display unit with a constant time interval.

With this, when the original image data in the identical folder are continuously displayed on the display unit in the mobile phone equipment, each original image data can be displayed with setting of a display time thereof.

According to the present invention as described above, the plurality of original image data obtained with the continuous photographing form of the camera function included in the mobile phone equipment and the thumbnail image data thereof are temporarily stored in a memory. Immediately after the original image data is obtained, the plurality of temporarily stored original image data can be continuously played back on the display unit. Therefore, since the original image data temporarily stored in the memory can be used in the present invention, an operation for continuous display of images by the user can be simplified. In addition, since storing of the plurality of obtained original image data and the thumbnail image data can be determined after checking of the played-back display in the present invention, only desired image data can be stored and a memory capacity can be efficiently used.

In addition, according to the present invention, in the mobile phone equipment, the plurality of original image data obtained with the continuous photographing form of the camera function included in the mobile phone equipment and the thumbnail image data thereof can be stored in the identical folder. Therefore, in the present invention, the user is not required to move the image data to each desired folder after the image data is stored, which can enhance operability of the user. In addition, in the present invention, continuous display of the plurality of original image data in the folder can be implemented easily by selecting the desired folder.

In addition, according to the present invention, after photographing with the continuous photographing form of the camera function included in the mobile phone equipment, the overview display screen of the thumbnail image data obtained with the photographing can be displayed. Therefore, since the user can check each image of the obtained image data immediately after the photographing in the present invention, convenience for the user can be enhanced.

That is, according to the present invention, with utilizing the camera function of the mobile phone equipment and, furthermore, utilizing a photographing method of a continuous shooting form of the camera function, and in a condition that a plurality of obtained still image data are temporarily stored, playback is immediately performed using a playback mode. Therefore, in the mobile phone equipment of the present invention, the user can check a state after the playback of the plurality of photographed and obtained still image data and then determine the need for storing the data, which enables to use the limited memory capacity of the mobile phone equipment efficiently.

### Brief Description of the Drawings

Fig. 1A is a schematic view from an inner side (a key surface) of a mobile phone as an embodiment of the present invention in an open state.
Fig. 1B is a schematic view from an outer side (a back surface) of the mobile phone shown in Fig. 1A in a closed state.
Fig. 2 is a schematic function block diagram for describing an electrical construction of the mobile phone shown in Fig. 1A.
Fig. 3 is a flow chart for describing a sequence of thumbnail generation which is executed in the mobile phone shown in Fig. 1A.
Fig. 4 is a schematic view for describing a detailed construction of an image data-storing memory in the mobile phone shown in Fig. 1A.
Fig. 5 is a flow chart for describing an operation of continuously displaying on a display unit a plurality of original image data obtained using a continuous photographing form of a camera mode of the mobile phone shown in Fig. 1A.
Figs. 6A and 6B are diagrams each describing a display screen for displaying an overview of thumbnail image data generated from the plurality of original image data obtained with the mobile phone shown in Fig. 1A.
Fig. 7 is a flow chart for describing an operation of storing the plurality of original image data obtained using the continuous photographing form of the camera mode of the mobile phone shown in Fig. 1A and the thumbnail image data in an identical folder.
Fig. 8 is a flow chart for describing an operation of continuously displaying on the display unit the plurality of original image data stored in the identical folder of the mobile phone shown in Fig. 1A.

### Best Modes for Carrying Out the Invention

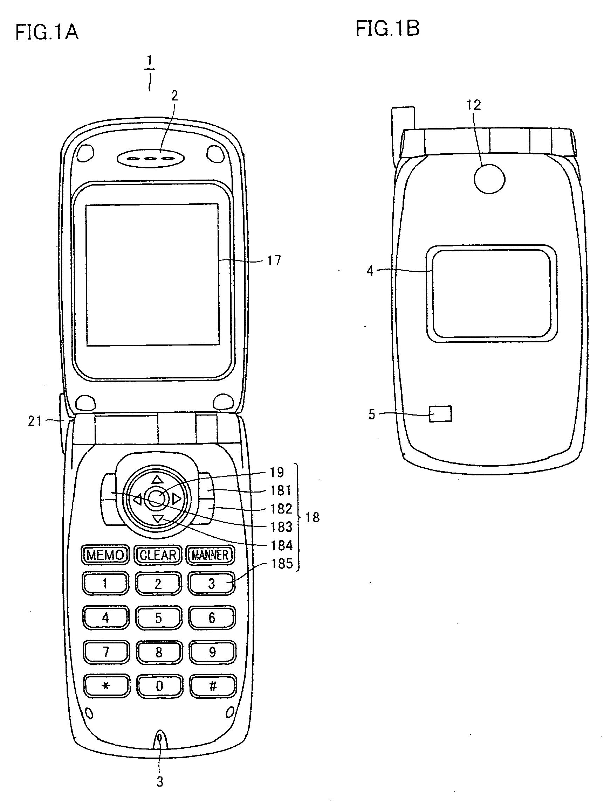

An embodiment of the present invention will now be described in detail referring to Figs. 1-8. Though the present invention is applicable to any given mobile equipment, a foldable camera-equipped mobile phone 1 (hereafter referred to as a mobile phone) is described in the following as a suitable embodiment. It is to be noted that, though the foldable mobile phone is described in the following, the present invention is not limited to this form and the present invention can also be applied to, for example, a straight-type mobile phone.

As shown in Figs. 1A and 1B, in mobile phone 1, a speaker 2 is arranged on an upper center position inside a lid portion, and a microphone 3 is arranged on a lower center position inside a main body portion. A key operation unit 18 is constructed with a shutter key 19 for photographing, a camera key 181 for activating a camera mode, a power key 182 for power-up, a mail key 183 for activating a mail mode, a cross key 184, a ten key 185 for inputting a number and a character, and the like.

A display unit 17 has a quadrangle shape and is arranged inside the lid portion on which speaker 2 is arranged, while a second display unit 4 has a quadrangle shape and is arranged near a center position outside the lid portion. Furthermore, an image pickup unit 12 is arranged near a center position and near a hinge outside the lid portion, and a user can photograph even in a closed state with checking a subject through second display unit 4. In addition, a backside key 5 is arranged below second display unit 4 and used as a shutter key in the closed state. Photographing utilizing backside key 5 in the closed state is suitable for photographing of the user himself. In an open state, on the other hand, the user can photograph by depressing shutter key 19 of key operation unit 18 with checking the subject through display unit 17 or second display unit 4.

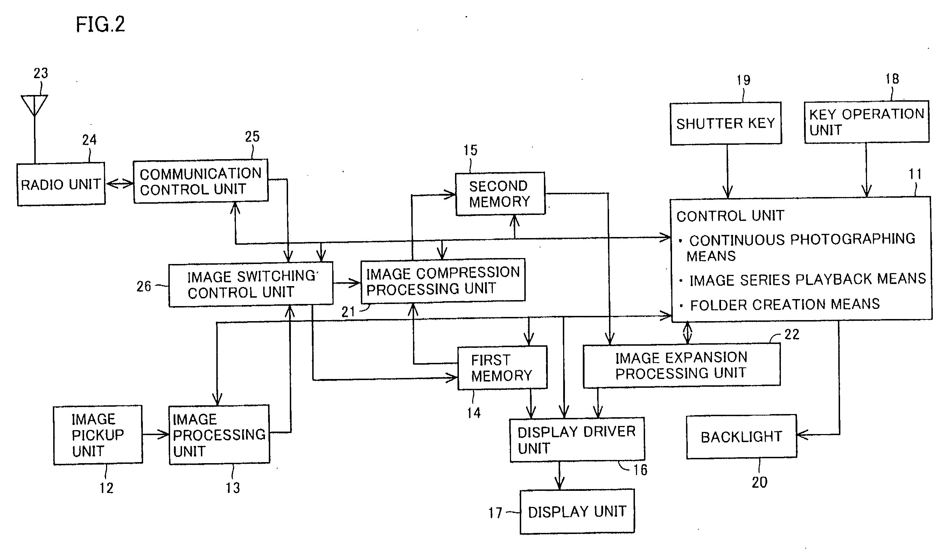

As shown in Fig. 2, mobile phone 1 of this embodiment mainly includes a control unit 11, image pickup unit 12, an image processing unit 13, a first memory 14, a second memory 15, a display driver unit 16, display unit 17, key operation unit 18, shutter key 19, a backlight 20, an image compression processing unit 21, an image expansion processing unit 22, an antenna 23, a radio unit 24, a communication control unit 25, and an image switching control unit 26.

Control unit 11 controls an operation of each portion constructing mobile phone 1, that is, for example, image processing unit 13, first memory 14, second memory 15, display driver unit 16, backlight 20, image compression processing unit 21, image expansion processing unit 22, communication control unit 25, or image switching control unit 26. Image pickup unit 12 includes a pickup lens, an image pickup device such as a CCD (Charge Coupled Device) image sensor or a CMOS (Complementary Metal Oxide Semiconductor) image sensor, and color filters of three colors of RGB. Image pickup unit 12 passes light, which is reflected from the subject and enters the pickup lens, through the color filters to obtain light of three colors of RGB, and converts respective three-color light of RGB into electric signals with the image pickup device.

Image processing unit 13 is formed of an amplification unit, an A/D (analog/digital) conversion unit and a signal processing unit. The amplification unit amplifies the electric signals corresponding to RGB sent from image pickup unit 12 and sends the result to the A/D conversion unit. The A/D conversion unit converts the (analog) electric signals corresponding to RGB which are amplified in the amplification unit into digital signals to output image data and sends the result to the signal processing unit. The signal processing unit performs signal processing such as interpolation processing of pixels to the image data sent from the A/D conversion unit. The signal processing unit sends the image data subjected to the signal processing to first memory 14 based on a control signal sent from control unit 11.

First memory 14 temporarily stores the image data sent from the signal processing unit. The image data is directly sent to first memory 14 via image switching control unit 26. The image data is then temporarily stored by, for example, deleting temporally old image data or overwriting the latest image data.

Control unit 11 transmits a control signal to display driver unit 16 and, concurrently, sends the image data stored in first memory 14 to display driver unit 16.

Display driver unit 16 applies a drive voltage to each pixel electrode of display unit 17 according to the image data to be displayed on display unit 17. Display unit 17 is realized with a liquid crystal display, an EL (Electro Luminescense) display or the like, and displays an image based on the image data sent via display driver unit 16.

Backlight 20 is constructed with a light-emitting diode, which is a light-emitting element, and the like, and illuminates display unit 17 from a backside. Control of lighting-up/extinguishing of backlight 20 and control such as brightness adjustment are performed by control unit 11. Backlight 20 may have a construction such that the lighting is continued until a certain operation for extinguishing is performed by the user, or a construction such that the light is extinguished after a lapse of a predetermined time from the lighting-up.

As described above, key operation unit 18 is constructed with ten key 185 for inputting a number and a character, and the like.

Shutter key 19 is depressed when the user wishes to shoot a desired image during photographing with a camera. Then, control unit 11 responds to a direction signal from shutter key 19 and temporarily stores the image data obtained via image pickup unit 12 and image processing unit 13 in first memory 14. Thereafter, based on a direction of the user, control unit 11 sends the temporarily-stored image data to image compression processing unit 21 for compression processing in image compression processing unit 21, and stores the result in second memory 15. Second memory 15 further stores image data and music data which are previously set, and also stores any kind of received data received via antenna 23 and the like, such as image data, music data or text data, and information data in a telephone directory retrieval mode, such as a telephone number or a name.

Based on a direction of control unit 11, image compression processing unit 21 compresses each image data sent from communication control unit 25 in a prescribed compression form, and sends the compressed image data to second memory 15. In addition, based on a direction of control unit 11, image compression processing unit 21 compresses the image data temporarily stored in first memory 14 in a prescribed compression form, and sends the compressed image data to second memory 15. On the other hand, image expansion processing unit 22 reads the image data compressed and stored in second memory 15 and performs expansion processing. Then, image expansion processing unit 22 sends the expanded image data to display driver unit 16.

Antenna 23 transmits and receives voice data, text data, image data and the like during radio communication with a base station through radio waves. Based on a prescribed communication protocol, radio unit 24 demodulates the data received from the base station via antenna 23 on reception, and modulates and amplifies the text data, image data and the like sent from communication control unit 25 to transmit to the base station via antenna 23 on transmission. Communication control unit 25 sends the image data in the received data which is demodulated by radio unit 24 to image compression processing unit Z1 via image switching control unit 26. Image compression processing unit 21 compresses the image data from a party on the other end which is received via radio unit 24, communication control unit 25 and image switching control unit 26, and stores the result in second memory 15. In addition, communication control unit 25 sends text data and the like in the received data to second memory 15 based on a direction of control unit 11.

When the image data is to be obtained, image switching control unit 26 switches between image processing unit 13 and communication control unit 25, from which path the image data is sent.

In addition, continuous photographing means in control unit 11 in this embodiment has photographing forms of, for example, 6 continuous shooting, 9 continuous shooting and 18 continuous shooting. When the user sets the photographing form after activation of the camera mode, the continuous photographing means in control unit 11 controls first memory 14 and when the user depresses shutter key 19 once, for example, a photographing operation in a set condition is repeated and still image data (hereafter referred to as original image data) of a plurality of frames as set is temporarily stored in first memory 14. In this step, thumbnail image data corresponding to obtained original image data is generated and similarly temporarily stored in first memory 14, as described below in detail.

In this embodiment, when the plurality of original image data and the thumbnail image data obtained in single continuous photographing are stored in second memory 15, header information is attached which indicates, for example, that the data is to be stored in an identical folder, or that the data is obtained in nth (n is an integer such as 1, 2, 3 ...) photographing.

Image series playback means in control unit 11 controls first memory 14 and display driver unit 16 to continuously display on display unit 17 the plurality of original image data obtained in single continuous photographing and temporarily stored in first memory 14. The image series playback means in this embodiment displays the plurality of original image data obtained in the single continuous photographing on display unit 17 in an order of photographing based on the header information held in the original image data. In addition, in mobile phone 1 of this embodiment, when the 9 continuous shooting is performed, for example, original image data of 9 frames is obtained within 1.5 seconds, and the original image data of 9 frames can be continuously displayed on display unit 17 in a similar time. With setting of a display time by the user, display of one original image data on display unit 17 for 3 seconds, for example, is also possible.

It is to be noted that, though continuous display of the original image data on display unit 17 is described above, the present invention is not limited to this situation. As an example, continuous display on display unit 17 using the thumbnail image data, or continuous display on display unit 17 using enlarged or reduced image data of the original image data or the thumbnail image data is also possible.

Folder creation means in control unit 11 controls first memory 14, second memory 15 and image compression processing unit 21 to compress the original image data and thumbnail image data temporarily stored in first memory 14 in a prescribed compression form and store the result in second memory 15. In this step, the folder creation means in control unit 11 identifies the plurality of original image data obtained in the single continuous photographing and the thumbnail image data generated from that original image data based on the header information held in respective original image data and thumbnail image data. Then, the folder creation means in control unit 11 creates a separate folder corresponding to each continuous photographing in second memory 15 to store the image data for each continuous photographing. Therefore, when the user selects a desired folder in an image series selection mode of mobile phone 1, the plurality of original image data in the folder can be continuously displayed, as described below in detail.

It is to be noted that, though second display unit 4 is shown in Fig. 1B, second display unit 4 and the accompanying display driver unit and backlight are not shown in Fig. 2.

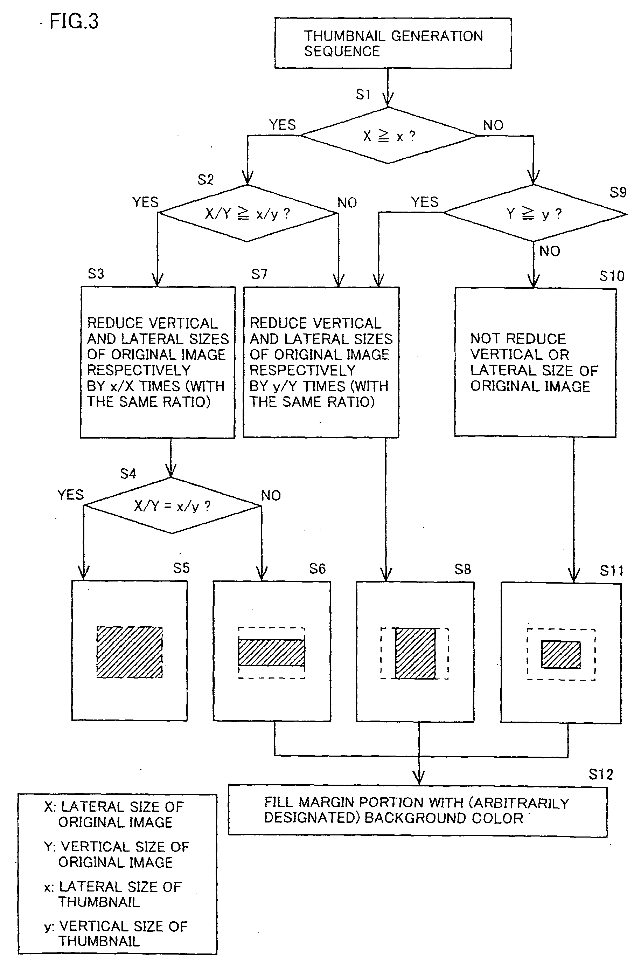

Description will now be given referring mainly to Figs. 3 and 4.

In this embodiment, photographing of a subject is possible utilizing the camera mode provided to mobile phone 1. In addition, as described above, this embodiment adopts a DCF (Design rule for Camera File system) format, and the original image data and thumbnail image data are generated from the image data output from image pickup unit 12 and are temporarily stored in first memory 14. Since the thumbnail image data is formed by reducing the original image data, a plurality of image data can be displayed concurrently on the same screen.

As shown in Fig. 3, it is assumed that, for example, an image of the original image data of a bitmap of a working memory has a vertical size of Y and a lateral size of X, while an image of the thumbnail image data has a vertical size of y and a lateral size ofx.

First, the lateral size X of the original image data is compared with the lateral size x of the thumbnail image data. If X≥x (step S1) and X/Y ≥ x/y (YES in step S2), then the vertical size Y and the lateral size X of the original image data are respectively reduced with the same ratio of x/X to avoid variation in a ratio of the vertical size Y and the lateral size X (step S3). As to the reduced image data, if X/Y = x/y (YES in step S4), the size of the reduced image data is corresponding to the size of the thumbnail image data, and the reduced image data is directly arranged in a thumbnail size region to generate the thumbnail image data (step S5). On the other hand, if X/Y ≠ x/y as to the reduced image data (NO in step S4), centering arrangement of the reduced image data in the thumbnail size region is performed (step S6). Thereafter, a margin region of the thumbnail size region is filled with an arbitrary background color to generate the thumbnail image data (step S12).

In addition, if X/Y < x/y (NO in step S2), then the vertical size Y and the lateral size X of the original image data are respectively reduced with the same ratio of y/Y to avoid variation in the ratio of the vertical size Y and the lateral size X (step S7). Then, centering arrangement of the reduced image data in the thumbnail size region is performed (step S8). Thereafter, the margin region of the thumbnail size region is filled with the arbitrary background color to generate the thumbnail image data (step S12).

If X < x (step S1) and Y ≥ y (YES in step S9), then the vertical size Y and the lateral size X of the original image data are respectively reduced with the same ratio of y/Y to avoid variation in the ratio of the vertical size Y and the lateral size X (step S7). Then, centering arrangement of the reduced image data in the thumbnail size region is performed (step S8). Thereafter, the margin region of the thumbnail size region is filled with the arbitrary background color to generate the thumbnail image data (step S12).

In addition, if Y < y (NO in step S9), the size of the original image data is already smaller than the size of the thumbnail image data, and thus the original image data is not reduced (step S10). Then, centering arrangement of the original image data in the thumbnail size region is performed (step S11). Thereafter, the margin region of the thumbnail size region is filled with the arbitrary background color to generate the thumbnail image data (step S12).

As described above, in this embodiment, the thumbnail image data is easily generated by reducing the original image data and performing centering arrangement of the reduced image data in the thumbnail size region. It is to be noted that, a method of generating the thumbnail image data need not be limited to the method described above, and generation with various methods is possible.

As shown in Fig. 4, each data field of an image data-storing memory in this embodiment includes an original image field for storing the original image data, a thumbnail image field for processing the original image data to obtain the thumbnail image data as described above regarding Fig. 3 and storing the thumbnail image data, and an image information field for storing a type of the image and the like. More specifically, the original image data and thumbnail image data obtained using the camera mode of mobile phone 1 are initially temporarily stored in first memory 14. When the user checks the photographed image through display unit 17 and directs to store the photographed image data, then the image data is compressed in a prescribed compression form and stored in second memory 15. In the image-storing memory of second memory 15 shown in Fig. 4, the original image data and thumbnail image data are compressed and stored for each record.

On the other hand, as described above, information indicating that the image data obtained using the camera mode of mobile phone 1 is obtained in the single continuous photographing, that the data is obtained in nth photographing of the continuous photographing, and the like is stored in the image information field.

That is, as shown in the drawing, the folder is separately created corresponding to the single continuous photographing in the image data-storing memory in second memory 15. In each folder, each original image data obtained with the continuous photographing is stored in a further folder together with the corresponding thumbnail image data, header information and the like, and is managed.

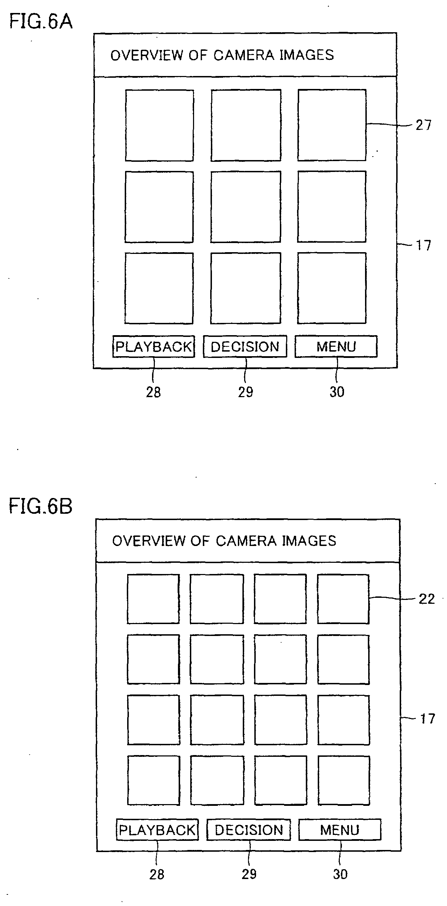

Description will now be given referring mainly to Figs. 5 and 6.

In this embodiment, as shown in Fig. 5, when the user operates camera key 181 provided on key operation unit 18 for activating the camera mode to direct to activate the camera mode, control unit 11 recognizes activation of the camera mode and activates the camera mode. More specifically, control unit 11 activates an application of the camera mode and, concurrently, supplies power to image pickup unit 12 and image processing unit 13 (step S21).

Then, the user operates key operation unit 18 to select the continuous photographing form of, for example, 6 continuous shooting, 9 continuous shooting or 18 continuous shooting, and the continuous photographing means in control unit 11 recognizes the set photographing form (step S22).

Next, control unit 11 gives image processing unit 13 image processing data stored in control unit 11, that is, data of a photographing size of an image and image quality, to set a condition of image pickup (step S23).

Then, by the user driving the image pickup device of the CCD image sensor, for example, in image pickup unit 12 to reflect a subject, image data of the subject is captured from image pickup unit 12 and input to first memory 14. Control unit 11 then controls first memory 14 and display driver unit 16 to display the image reflected by the user on display unit 17. The user checks the image displayed on display unit 17 and determines whether to continuously photograph the subject or not. When the user continuously photographs the subject, the user depresses shutter key 19 (YES in step S24). The continuous photographing means in control unit 11 controls image processing unit 13 and stops to send the image data to first memory 14 after the continuous photographing of set frames is performed (step S25). Control unit 11 then controls image processing unit 13 to generate the thumbnail image data from the obtained original image data (step S26). Control unit 11 temporarily stores the plurality of original image data sent to first memory 14 and the thumbnail image data corresponding to the image (step S27). On the other hand, control unit 11 controls first memory 14 and display driver unit 16 to display on display unit 17 an overview of a plurality of continuously photographed thumbnail image data (step S28). If the user does not depress shutter key 19, display unit 17 is kept displaying the image reflected by the user (NO in step S24).

Next, the user checks the overview display screen of the thumbnail image data displayed on display unit 17 and operates key operation unit 18 to direct to continuously display the continuously photographed plurality of original image data on display unit 17 (YES in step S29). The image series playback means in control unit 11 controls first memory 14 and display driver unit 16 to continuously display on display unit 17 the continuously photographed plurality of original image data in the order of photographing (step S30). Thereafter, control unit 11 again controls first memory 14 and display driver unit 16 to display on display unit 17 an overview of the continuously photographed plurality of thumbnail image data (step S31). Then, the user can check the overview display screen of the thumbnail image data displayed on display unit 17 and operate key operation unit 18 again for continuous display of the continuously photographed plurality of original image data on display unit 17 (YES in step S32). That is, in this embodiment, the user can enjoy playback of continuous images repeatedly by operating key operation unit 18 while the original image data is temporarily stored in first memory 14.

When the user does not continuously display the plurality of original image data on display unit 17 again (NO in step S32) and stores the continuously photographed original image data and the thumbnail image data, the user, for example, depresses key operation unit 18 corresponding to a storage icon displayed on display unit 17 (YES in step S33). The folder creation means in control unit 11 controls first memory 14, second memory 15 and image compression processing unit 21 to create a new folder for storing these image data in second memory 14. The folder creation means in control unit 11 then compresses the continuously photographed original image data and the thumbnail image data in a prescribed compression form and stores the result in the folder as a batch (step S34). Processing then returns to step S24 and the user again checks the image displayed on display unit 17 and determines whether to continuously photograph the subject or not.

When the user does not depress key operation unit 18 corresponding to the storage icon displayed on display unit 17, for example, (NO in step S33) and depresses key operation unit 18 corresponding to an end icon displayed on display unit 17 (YES in step S35), control unit 11 ends the camera mode of mobile phone 1. In this situation, the original image data and thumbnail image data temporarily stored in first memory 14 are deleted. If the user does not depress key operation unit 18 corresponding to the end icon (NO in step S35), display unit 17 is kept displaying the overview display screen of the thumbnail image data (step S28).

Each of Figs. 6A and 6B shows the overview display screen of the thumbnail images displayed on display unit 17 in step S28 or step S31 of Fig. 5. As shown in Fig. 6A, in this embodiment, for example, 9 thumbnail images 27 arranged in 3 rows and 3 columns are displayed, for example, on almost a whole surface of display unit 17 of mobile phone 1. Thus, when the photographing in the form of 6 continuous shooting is performed, 6 thumbnail images 27 are displayed from an upper portion of display unit 17. When the photographing in the form of 9 continuous shooting is performed, 9 thumbnail images 27 are displayed on display unit 17 as shown in the drawing. When the photographing in the form of 18 continuous shooting is performed, 9 thumbnail images 27 are displayed on display unit 17 as shown in the drawing, and remaining 9 thumbnail images 27 are displayed on a next page. The user can then operate cross key 184 of key operation unit 18 to see both pages on which thumbnail images 27 are displayed.

In this embodiment, 9 thumbnail images 27 displayed on display unit 17 correspond to ten keys 185 to which numbers 1-9 are allocated as shown in Fig. 1A. That is, in mobile phone 1, thumbnail image 22 displayed on a left-uppermost position of display unit 17 corresponds to ten key 185 for a number 1, and when ten key 185 for the number 1 is depressed with the overview display screen of the thumbnail images, the original image data corresponding to that thumbnail image 22 is displayed on display unit 17.

It is to be noted that, a method of displaying the original image data from the thumbnail overview display screen is not necessarily limited to the method described above. The original image data may be displayed by, for example, operating cross key 184 to select a desired thumbnail image and, thereafter, depressing key operation unit 18 corresponding to a decision icon 29 displayed on display unit 17 (for example, shutter key 19 in this embodiment).

In addition, a playback icon 28 and a menu icon 30 are also displayed on a lower portion of display unit 17 and, for example, playback icon 28 corresponds to mail key 183 of key operation unit 18 shown in Fig. 1A, while menu icon 30 corresponds to camera key 181. When mail key 183 corresponding to playback icon 28 is depressed, the plurality of original image data are continuously displayed on display unit 17 as described in step 30 of Fig. 5. On the other hand, when camera key 181 corresponding to menu icon 30 is depressed, the storage icon, end icon and the like corresponding to steps S33 and S35 in Fig. 5 are displayed on display unit 17. By depressing key operation unit 18 corresponding to these icons, respective operations as described above are performed in mobile phone 1.

On the other hand, as shown in Fig. 6B, in mobile phone 1 of this embodiment, for example, 16 thumbnail images 27 arranged in 4 rows and 4 columns can also be displayed, for example, on almost the whole surface of display unit 17. The display screen shown in Fig. 6A and the display screen shown in Fig. 6B can be changed with setting by the user.

In a display method shown in Fig. 6B, thumbnail images 27 displayed on display unit 17 correspond to ten keys 185 by an arrangement thereof, as in a display method shown in Fig. 6A. In Fig. 6B, ten keys 185 to which numbers 1-0, * and # are allocated, for example, correspond to thumbnail images 27. As other operations of the icons displayed on display unit 17 are similar to those as described with Fig. 6A, reference is made to the description and the description will not be repeated here.

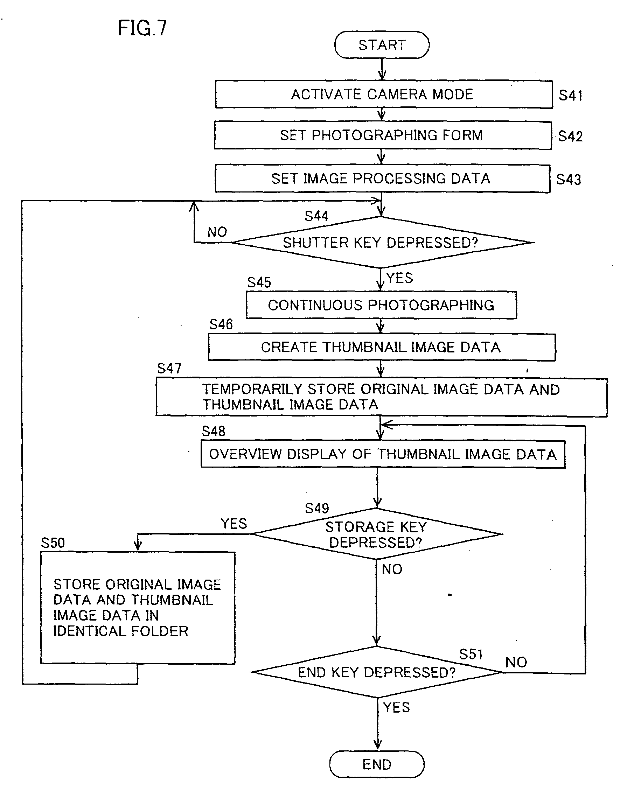

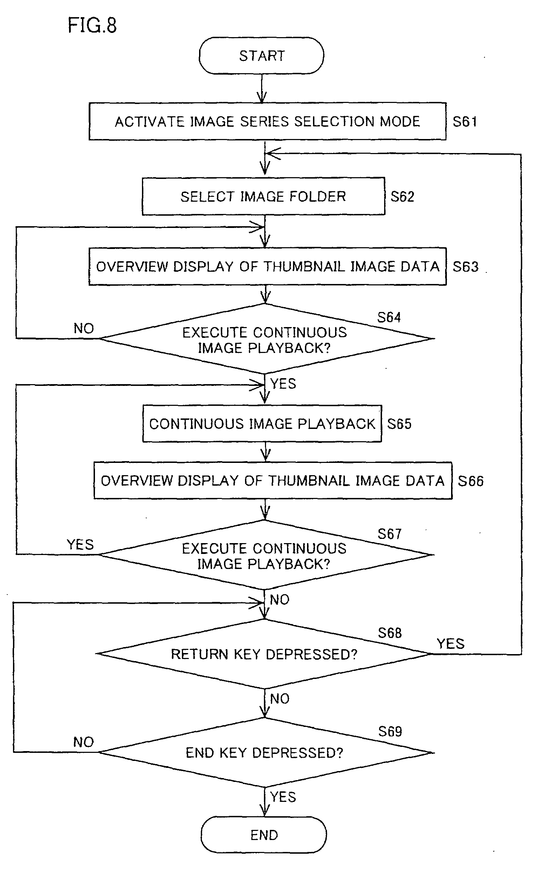

An embodiment will now be described using Figs. 7 and 8, in which embodiment the plurality of original image data obtained using the camera mode of mobile phone 1 are stored in an identical folder and, thereafter, the folder is selected to continuously display on the display unit the plurality of original image data in the folder.

In this embodiment, as shown in Fig. 7, when the user operates camera key 181 provided on key operation unit 18 for activating the camera mode to direct to activate the camera mode, control unit 11 recognizes activation of the camera mode and activates the camera mode. More specifically, control unit 11 activates an application of the camera mode and, concurrently, supplies power to image pickup unit 12 and image processing unit 13 (step S41).

Then, the user operates key operation unit 18 to select the continuous photographing form of, for example, 6 continuous shooting, 9 continuous shooting or 18 continuous shooting, and the continuous photographing means in control unit 11 recognizes the set photographing form (step S42).

Next, control unit 11 gives image processing unit 13 image processing data stored in control unit 11, that is, data of a photographing size of an image and image quality, to set a condition of image pickup (step S43).

Then, by the user driving the image pickup device of the CCD image sensor, for example, in image pickup unit 12 to reflect a subject, image data of the subject is captured from image pickup unit 12 and input to first memory 14. Control unit 11 then controls first memory 14 and display driver unit 16 to display the image reflected by the user on display unit 17.

The user checks the image displayed on display unit 17 and determines whether to continuously photograph the subject or not. When the user continuously photographs the subject, the user depresses shutter key 19 (YES in step S44). The continuous photographing means in control unit 11 controls image processing unit 13 and stops to send the image data to first memory 14 after the continuous photographing of set frames is performed (step S45).

Control unit 11 then controls image processing unit 13 to generate the thumbnail image data from the obtained original image data (step S46). Control unit 11 temporarily stores the plurality of original image data sent to first memory 14 and the thumbnail image data corresponding to the image (step S47). On the other hand, control unit 11 controls first memory 14 and display driver unit 16 to display on display unit 17 an overview of a plurality of continuously photographed thumbnail image data (step S48). If the user does not depress shutter key 19, display unit 17 is kept displaying the image reflected by the user (NO in step S44).

Next, the user checks the overview display screen of the thumbnail image data displayed on display unit 17. To store the continuously photographed original image data and the thumbnail image data, the user, for example, depresses key operation unit 18 corresponding to the storage icon displayed on display unit 17 (YES in step S49). The folder creation means in control unit 11 controls first memory 14, second memory 15 and image compression processing unit 21 to create a new folder for storing these image data in second memory 14. The folder creation means in control unit 11 then compresses the continuously photographed original image data and the thumbnail image data in a prescribed compression form and stores the result in the folder as a batch (step S50). Processing then returns to step S44 and the user again checks the image displayed on display unit 17 and determines whether to continuously photograph the subject or not.

When the user does not depress key operation unit 18 corresponding to the storage icon displayed on display unit 17, for example (NO in step S49), and depresses key operation unit 18 corresponding to the end icon displayed on display unit 17 (YES in step S51), control unit 11 ends the camera mode of mobile phone 1. In this situation, the original image data and thumbnail image data temporarily stored in first memory 14 are deleted. If the user does not depress key operation unit 18 corresponding to the end icon (NO in step S51), display unit 17 is kept displaying the overview display screen of the thumbnail image data (step S48).

In this embodiment, as shown in Fig. 8, when the user selects a desired folder using the image series selection mode of mobile phone 1 and operates key operation unit 18 to direct an activation of the image series selection mode to continuously display on the display unit the plurality of original image data in the folder (step S61), control unit 11 controls display driver unit 16 to display on display unit 17 an overview display screen of a list of image folders. When the user operates key operation unit 18 (for example, cross key 184) according to the display screen to select the desired image folder on the screen and depresses a key in key operation unit 18 corresponding to the decision icon (step S62), control unit 11 controls second memory 15, display driver unit 16 and image expansion processing unit 22 to display on display unit 17 an overview display screen of the thumbnail image data in the folder (step S63). In this situation in this embodiment, the thumbnail image data stored in second memory 15 is expanded in image expansion processing unit 22 and displayed on display unit 17.

Next, the user checks the overview display screen of the thumbnail image data displayed on display unit 17 and operates key operation unit 18 to direct to continuously display the continuously photographed plurality of original image data on display unit 17 (YES in step S64). The image series playback means in control unit 11 controls second memory 15, display driver unit 16 and image expansion processing unit 22 to continuously display on display unit 17 the continuously photographed plurality of original image data in the order of photographing (step S65). Thereafter, control unit 11 again controls display driver unit 16 to display on display unit 17 an overview of the continuously photographed plurality of thumbnail image data (step S66). Then, the user can check the overview display screen of the thumbnail image data displayed on display unit 17 and operate key operation unit 18 again for continuous display of the continuously photographed plurality of original image data on display unit 17 (YES in step S67). That is, in this embodiment, the user can continuously display the original image data in the selected folder repeatedly on display unit 17. As described above, in this embodiment, the original image data in second memory 15 is displayed on display unit 17 via image expansion processing unit 22. As a manner of displaying, by setting of various display times by the user, the original image data in second memory 15 can be displayed for the set display time, that is, with a constant time interval.

When the user does not continuously display the plurality of original image data on display unit 17 (NO in step S67) and selects another folder to continuously display original image data in that another folder, the user depresses, for example, key operation unit 18 corresponding to a return icon displayed on display unit 17 (YES in step S68). Process returns to step S62 and control unit 11 controls display driver unit 16 to display on display unit 17 the overview display screen of the list of image folders.

When the user does not depress key operation unit 18 corresponding to the return icon displayed on display unit 17, for example (NO in step S68), and depresses key operation unit 18 corresponding to the end icon displayed on display unit 17 (YES in step S69), control unit 11 ends the image series selection mode of mobile phone 1.
If the user does not depress key operation unit 18 corresponding to the end icon (NO in step S69), display unit 17 is kept displaying the overview display screen of the thumbnail image data (step S68).

Though an example of the continuous playback on the display unit using the plurality of original image data obtained with the continuous photographing has been described above in this embodiment, the present invention is not necessarily limited to this example Continuous display on the display unit using, for example, the thumbnail image data generated corresponding to the original image data is also possible.
Various other modifications are possible within a scope of a general description of the present invention.

It is clearly understood that the embodiment is disclosed by way of illustration and example in every respect and is not to be taken by way of limitation. The scope of the present invention is indicated by the appended claims rather than the above description, and any modification having an equal meaning to and within the scope of the appended claims is intended to be included in the present invention.

## Claims

1. Mobile phone equipment, comprising:
a photographing unit (12) for converting incident light into an electric signal and outputting as image data;
a first image data storage unit (14) for temporarily storing a plurality of original image data obtained with a continuous photographing function of said photographing unit;
a display unit (17) for displaying said original image data; and
an image data playback unit (11) for continuously displaying on said display unit (17) the plurality of said original image data stored in said first image data storage unit (14).

2. The mobile phone equipment according to claim 1, further comprising
a thumbnail image data generation unit (11) for generating thumbnail image data from said original image data, wherein
on said display unit (17), an overview of said thumbnail image data of the plurality of original image data is displayed after the plurality of said original image data are obtained with the continuous photographing function of said photographing unit (12).

3. The mobile phone equipment according to claim 2, further comprising
a second image data storage unit (15) for permanently storing image data, wherein
in the second image data storage unit (15), the plurality of said original image data obtained in single photographing through the continuous photographing function of said photographing unit (12) and said thumbnail image data are stored in an identical folder.

4. The mobile phone equipment according to claim 2, wherein
in said first image data storage unit (14), said original image data and said thumbnail image data are temporarily stored.

5. The mobile phone equipment according to claim 4, further comprising
a second image data storage unit (15) for permanently storing image data, wherein
in the second image data storage unit (15), the plurality of said original image data obtained in single photographing through the continuous photographing function of said photographing unit (12) and said thumbnail image data are stored in an identical folder.

6. Mobile phone equipment, comprising:
a photographing unit (12) for converting incident light into an electric signal and outputting as image data;
a thumbnail image data generation unit (11) for obtaining said image data as original image data and generating thumbnail image data from the original image data;
a display unit (17) for displaying an overview of a plurality of thumbnail image data generated from a plurality of original image data obtained by said photographing unit through a continuous photographing function;
an image data storage unit (15) for storing said original image data and said thumbnail image data in an identical folder; and
an image data playback unit (11) for reading said original image data from said folder and continuously displaying on said display unit.

7. The mobile phone equipment according to claim 6, wherein
in said image data playback unit (11), the plurality of said original image data are displayed on said display unit with a constant time interval.
